# FASCICULE DE BREVET EUROPEEN

(11) **EP 2 794 303 B1**
(45) Date de publication et mention de la délivrance du brevet: **09.12.2015**
(21) Numéro de dépôt: 12808809.3
(22) Date de dépôt: 18.12.2012
(51) Int. Cl.: B60C 19/00, B60C 9/18

(54) **SOMMET POUR PNEUMATIQUE D'AVION**
KRONE FÜR EINEN FLUGZEUGREIFEN
CROWN FOR AN AIRCRAFT TIRE

(30) Priorité: 20.12.2011 FR 1162025
(43) Date de publication de la demande: 29.10.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CHAMBRIARD, François, F-63040 Clermont-Ferrand Cedex 9 (FR); ROCHE, Gilles, F-63040 Clermont-Ferrand Cedex 9 (FR)
(74) Mandataire: Millanvois, Patrick Jacques Jean
(86) Numéro de dépôt international: PCT/EP2012/075938
(87) Numéro de publication internationale: WO 2013/092578

(56) Documents cités:
- EP-A1- 2 127 907
- EP-A2- 0 174 147
- EP-A2- 0 414 470
- EP-A2- 0 442 678
- US-A- 4 603 721

## Description

La présente invention concerne un pneumatique pour avion, et, en particulier, le sommet d'un pneumatique pour avion.

Un pneumatique pour avion est décrit dans le document EP-A-0174147.

Les constructeurs d'avions ont comme préoccupation constante la sécurité des passagers et, par conséquent, la diminution des risques de défaillance de leurs appareils. Parmi les modes de défaillance envisagés, la perte partielle ou totale de la bande roulement d'un pneumatique, équipant le train d'atterrissage d'un avion, est un mode de défaillance critique, au cours des phases de décollage ou d'atterrissage d'un avion.

Ce mode de défaillance se produit, en particulier, lorsque le pneumatique roule sur un objet contondant présent de façon aléatoire sur la piste. Compte tenu des conditions d'usage sévères d'un pneumatique d'avion, caractérisées par une pression de gonflage, une charge statique et une vitesse élevées, le passage de la bande de roulement du pneumatique sur l'objet contondant entraîne un endommagement de la bande de roulement qui aboutit généralement au découpage de la bande de roulement puis à la projection de morceaux de bande de roulement de dimensions géométriques et de masses plus ou moins élevées.

Les morceaux de bande de roulement peuvent alors soit percuter les structures de l'avion et entraîner des dommages structurels importants, du fait de l'énergie mécanique emmagasinée par lesdits morceaux, cette énergie mécanique étant d'autant plus importante que la masse et la vitesse de projection du morceau sont élevées, soit pénétrer dans les moteurs de l'avion et entraîner des problèmes de fonctionnement desdits moteurs, si ceux-ci ne peuvent pas absorber les morceaux de bande roulement en raison de leurs dimensions trop importantes.

Il a été envisagé de renforcer les structures de l'avion pour résister aux impacts potentiels et, en particulier, ceux des morceaux de bande de roulement. Mais, à iso-matériaux, cette solution implique une augmentation de la masse de la structure, pénalisante pour la performance de l'avion, d'où l'utilisation de matériaux structurels de plus en plus légers. Le renforcement mécanique de la structure ne règle toutefois pas le problème de projections dans les moteurs.

Des dispositifs de protection vis-à-vis de la projection de morceaux de bande de roulement ont été également envisagés. Le document WO 2010012913 décrit un panneau de protection, dont la surface externe comporte un matériau composite, monté, par l'intermédiaire de pièces déformables, sur un support lié à la structure de l'avion. Les pièces déformables, fixées sur plusieurs pièces de rigidification du support et perpendiculaires à la surface externe du panneau de protection, sont adaptées à flamber sous l'effet des impacts des morceaux de bande de roulement projetés. Le document WO 2010052447 décrit un dispositif protégeant les moteurs d'un avion de la projection de débris de bande de roulement de pneumatique. Ce dispositif comprend une barre de protection connectée de manière pivotante au train d'atterrissage principal de l'avion, la barre de protection étant mobile entre une première et une seconde positions. Dans la première position, la barre de protection s'étend latéralement en travers de l'ensemble monté, constitué du pneumatique et d'une roue, pour intercepter les trajectoires possibles des débris de bande de roulement.

Une autre famille de solutions décrit des dispositifs de fractionnement de la bande roulement, en vue de minimiser la taille des morceaux de bande de roulement et donc de minimiser les impacts sur l'avion. Le document US 7669798 décrit des moyens de fractionnement, situés entre la roue et une autre partie de l'avion, aptes à fragmenter en plusieurs morceaux la partie de la bande de roulement qui se détache du pneumatique et est projetée vers l'autre partie de l'avion. Ces moyens de fractionnement, tels qu'une grille avec des lames aptes à sectionner le matériau de la bande de roulement, sont agencés pour disperser lesdits morceaux.

Les dispositifs de protection ou de fractionnement précédemment décrits présentent l'inconvénient de constituer des structures additionnelles, dont les masses supplémentaires sont pénalisantes vis-à-vis de la charge utile de l'avion.

Les inventeurs se sont donnés pour objectif de diminuer les dimensions et donc la masse des morceaux de bande de roulement, en cas de déchapage accidentel du pneumatique, sans l'utilisation de dispositifs additionnels extérieurs au pneumatique, donc sans pénalisation de la charge utile de l'avion.

Cet objectif a été atteint, selon l'invention, par un pneumatique pour avion comprenant :
- une bande de roulement destinée à venir en contact avec un sol par l'intermédiaire d'une surface de roulement et radialement comprise entre une surface de fond et la surface de roulement,
- la bande de roulement comprenant au moins deux nervures circonférentielles adjacentes à au moins un sillon circonférentiel,
- chaque nervure circonférentielle s'étendant radialement entre la surface de fond et la surface de roulement et axialement entre deux arêtes dans la surface de roulement,
- une armature de sommet radialement intérieure à la surface de fond, une couche de déchapage étant disposée:
- radialement à l'intérieur d'au moins une nervure circonférentielle entre la surface de fond et l'armature de sommet,
- axialement entre les deux arêtes de ladite nervure circonférentielle, dans la surface de roulement,
- et circonférentiellement sur au moins une partie de la circonférence du pneumatique, et la distance radiale entre la couche de déchapage et la surface de fond étant au plus égale à 1 mm.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. On appelle plan équatorial le plan perpendiculaire à l'axe de rotation du pneumatique et passant par le milieu de la surface de roulement du pneumatique.

Dans ce qui suit, les expressions « radialement », « axialement » et « circonférentiellement » signifient respectivement « selon la direction radiale », « selon la direction axiale » et « selon la direction circonférentielle ». Les expressions « radialement intérieur, respectivement extérieur» signifient « plus proche, respectivement plus éloigné, de l'axe de rotation du pneumatique, selon la direction radiale, que ». Les expressions « axialement intérieur, respectivement extérieur» signifient « plus proche, respectivement plus éloigné, du plan équatorial, selon la direction axiale, que ». On désignera également par « épaisseur ou hauteur radiale », « largeur axiale » et « longueur circonférentielle » d'un élément donné les dimensions respectives de cet élément selon les directions radiale, axiale et circonférentielle.

De façon générale, un pneumatique comprend un sommet comprenant une bande roulement destinée à venir en contact avec le sol par l'intermédiaire d'une surface de roulement, ledit sommet étant relié par deux flancs à deux bourrelets destinés à venir en contact avec une jante.

La bande de roulement est un volume torique compris radialement entre une surface de fond radialement intérieure et une surface de roulement radialement extérieure : c'est la portion usante du pneumatique.

La surface de fond est une surface théorique délimitant la hauteur d'usure maximale autorisée : lorsque le niveau d'usure atteint cette surface de fond, le pneumatique est retiré.

La surface de roulement est destinée à entrer en contact avec le sol. Par convention, on définit la largeur axiale de la surface de roulement comme la distance axiale entre les limites axiales de contact de la surface de roulement, lorsque le pneumatique à l'état neuf est soumis à une flèche radiale égale à 32%, sous l'action combinée de la charge verticale et de la pression de gonflage. Par définition, la flèche radiale d'un pneumatique est sa déformation radiale, ou variation relative de hauteur radiale, lorsque celui-ci passe d'un état gonflé non chargé à un état gonflé chargé en statique. Elle est définie par le rapport de la variation de la hauteur radiale du pneumatique sur la moitié de la différence entre le diamètre extérieur du pneumatique et le diamètre maximum de la jante mesuré sur le crochet de jante. Le diamètre extérieur du pneumatique est mesuré en statique dans un état non chargé gonflé à la pression nominale telle que recommandée, par exemple, par la Tire and Rim Association ou TRA.

La bande de roulement est généralement constituée d'éléments en relief s'étendant radialement vers l'extérieur à partir de la surface de fond, lesdits éléments en relief étant séparés des creux. Dans le cas d'un pneumatique d'avion, les éléments en relief sont le plus souvent des nervures circonférentielles séparées par des creux circonférentiels, appelés sillons circonférentiels. Une nervure circonférentielle est caractérisée par sa hauteur radiale, entre la surface de fond et la surface de roulement, et par sa largeur axiale, distance entre les extrémités axiales de sa surface de contact avec le sol. A titre d'exemple, une bande de roulement d'un pneumatique d'avion peut comprendre, symétriquement par rapport au plan équatorial, deux nervures axialement les plus extérieures dites nervures d'épaule, axialement limitées à l'extérieur par les bords de la bande de roulement et à l'intérieur par un sillon circonférentiel, deux nervures intermédiaires, et, au centre de la bande de roulement, une nervure centrale.

L'armature de sommet est la structure de renforcement du pneumatique radialement intérieure à la bande de roulement et le plus souvent radialement extérieure à l'armature de carcasse radiale. L'armature de sommet d'un pneumatique pour avion comprend généralement au moins une couche d'armature de sommet, dite couche de sommet. Chaque couche de sommet est constituée d'éléments de renforcement enrobés dans un matériau élastomérique, c'est-à-dire à base de caoutchouc naturel ou synthétique, lesdits éléments de renforcement parallèles entre eux formant, avec la direction circonférentielle, un angle compris entre +20° et -20°. Dans un pneumatique d'avion, les éléments de renforcement d'une couche de sommet sont généralement disposés circonférentiellement selon une courbe ondulée.

Parmi les couches de sommet, on distingue les couches de travail composant l'armature de travail, constituées le plus souvent d'éléments de renforcement textiles, et les couches de protection composant l'armature de protection, constituées d'éléments de renforcement métalliques ou textiles, et disposées radialement à l'extérieur de l'armature de travail. Les couches de travail conditionnent le comportement mécanique du sommet. Les couches de protection protègent essentiellement les couches de travail des agressions susceptibles de se propager à travers la bande de roulement radialement vers l'intérieur du pneumatique. Une couche de sommet, en particulier une couche de travail, est souvent une couche axialement large, c'est-à-dire qu'elle a une largeur axiale, par exemple, au moins égale au deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale.

Les éléments de renforcement des couches de carcasse et de travail, pour les pneumatiques d'avion, sont le plus souvent des câbles constitués de filés de filaments textiles, préférentiellement en polyamides aliphatiques ou en polyamides aromatiques. Les éléments de renforcement des couches de protection peuvent être soit des câbles constitués de fils métalliques, soit des câbles constitués de filés de filaments textiles.

Les propriétés mécaniques en extension des éléments de renforcement textiles, telles que le module, l'allongement et la force à la rupture, sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les éléments de renforcement textiles subissent ensuite une traction sur une longueur initiale de 400 mm à une vitesse nominale de 200 mm/min. Tous les résultats sont une moyenne de 10 mesures.

Selon l'invention, une couche de déchapage est disposée radialement à l'intérieur d'au moins une nervure circonférentielle entre la surface de fond et l'armature de sommet, axialement entre les deux arêtes de ladite nervure circonférentielle dans la surface de roulement, et circonférentiellement sur au moins une partie de la circonférence du pneumatique.

Par couche de déchapage, on entend un moyen qui permet de calibrer la taille maximale des morceaux de bande de roulement lors d'un déchapage accidentel d'un pneumatique, c'est-à-dire lors de la perte accidentelle de la bande de roulement également appelée chape. Cette couche de déchapage est le plus souvent, mais pas exclusivement, un matériau, comprenant des éléments de renforcement parallèles entre eux.

Lorsqu'un pneumatique d'avion, en phase de décollage ou d'atterrissage roule sur un objet contondant, celui-ci peut couper la bande de roulement et initier une fissure sur une certaine épaisseur radiale. Lors du passage de cette fissure dans l'aire de contact de la surface de roulement avec le sol, sous l'action des sollicitations mécaniques cycliques à chaque tour de roue, cette fissure se propage radialement vers l'intérieur du pneumatique jusqu'à la couche de sommet la plus radialement extérieure, puis axialement et circonférentiellement le long de la face radialement extérieure de la couche de sommet la plus radialement extérieure, entraînant le découpage du sommet du pneumatique au niveau de la couche de sommet la plus radialement extérieure. Sous l'effet des sollicitations mécaniques et en particulier des efforts centrifuges, la fissuration va ensuite se propager radialement vers l'extérieur du pneumatique à travers la bande de roulement, à divers azimuts du pneumatique. Il en résulte que la portion de bande de roulement ainsi découpée sous forme de morceaux de dimensions plus ou moins importantes, voire la bande de roulement quasiment complète, va se détacher du pneumatique et être projetée vers l'extérieur avec le risque de heurter la structure de l'avion ou de pénétrer dans les moteurs.

Dans une architecture de sommet classique, les morceaux de bande de roulement, obtenus après déchapage, ont une épaisseur radiale maximale correspondant à la distance radiale entre la surface de roulement et la face radialement extérieure de la couche de sommet la plus radialement extérieure. Les morceaux de bande de roulement peuvent s'étendre axialement sur une partie ou sur toute la largeur axiale de la bande de roulement. Circonférentiellement, les morceaux de bande de roulement peuvent s'étendre sur une grande partie de la périphérie du pneumatique, voire sur toute sa périphérie.

Une couche de déchapage, selon l'invention, permet de limiter les dimensions des morceaux de bande de roulement, après déchapage, c'est-à-dire leur épaisseur radiale, leur largeur axiale et leur longueur circonférentielle.

La couche de déchapage étant disposée radialement à l'intérieur d'au moins une nervure circonférentielle entre la surface de fond et l'armature de sommet, la fissure initiée par un objet contondant va se propager radialement vers l'intérieur jusqu'à la couche de déchapage avant d'évoluer axialement et circonférentiellement. En d'autres termes, la fissure va se propager moins profondément grâce à cette couche de déchapage qui fait obstacle à sa propagation radiale. La couche de déchapage étant radialement extérieure à l'armature de sommet, l'épaisseur radiale maximale d'un morceau de bande de roulement est inférieure à celle obtenue en l'absence de couche de déchapage. Par ailleurs, le fait d'être radialement intérieur à la surface de fond garantit que la couche de déchapage ne va pas apparaître au cours de l'usure de la nervure circonférentielle et limiter ainsi la durée de vie sur usure du pneumatique.

Par ailleurs la couche de déchapage est disposée axialement entre les deux arêtes de ladite nervure circonférentielle dans la surface de roulement. En d'autres termes, chaque nervure circonférentielle a sa couche de déchapage individuelle, qui ne s'étend pas axialement au-delà des arêtes de ladite nervure circonférentielle dans la surface de roulement. Ceci implique une discontinuité entre les couches de déchapage respectives des nervures circonférentielles constituant la bande de roulement. Par conséquent, la couche de déchapage n'est pas un moyen unique commun à toutes les nervures circonférentielles. Ceci permet d'éviter la propagation axiale de la fissure d'une nervure circonférentielle à l'autre. Ainsi, si une seule nervure est endommagée par un objet contondant, celle-ci devrait être la seule victime de la fissuration. En d'autres termes, seule la nervure circonférentielle concernée serait amenée à se désolidariser du pneumatique.

Enfin la couche de déchapage est disposée circonférentiellement sur au moins une partie de la circonférence du pneumatique. Généralement, mais pas obligatoirement, la couche de déchapage sera continue sur toute la circonférence du pneumatique. Elle pourra, le cas échéant, être répartie selon des secteurs angulaires à optimiser.

Les inventeurs ont pu observer que la présence de la couche de déchapage permettait de réduire la longueur circonférentielle des morceaux de bande de roulement. Ils ont interprété ce fait comme étant le résultat d'une flexion cyclique de la couche de déchapage, autour de la direction axiale, en certains points circonférentiellement répartis de la couche de déchapage. En d'autres termes, la couche de déchapage est soumise le long de sa circonférence à des effets de charnière pouvant aboutir à la rupture locale de la couche de déchapage.

Il est important de noter que le matériau de la couche de déchapage a été choisi de façon à ne pas apporter de contribution mécanique au fonctionnement du sommet. Sa présence ne modifie pas le fonctionnement mécanique du sommet.

Encore selon l'invention, la distance radiale entre la couche de déchapage et la surface de fond est au plus égale à 1 mm. Cette distance maximale garantit que la couche de déchapage est en-dessous du niveau d'usure maximale de la bande de roulement et qu'elle ne va pas apparaitre au cours de l'usure de la nervure circonférentielle. Elle garantit simultanément une épaisseur radiale minimale des morceaux de bande de roulement amenés à se détacher.

Avantageusement, la distance radiale entre la couche de déchapage et l'armature de sommet est au moins égale à 2 mm. Outre le fait de garantir une épaisseur radiale minimale des morceaux de bande de roulement, elle permet de protéger l'armature de sommet en évitant la propagation de la fissure jusqu'à l'armature de sommet. Ce positionnement évite également tout couplage mécanique avec l'armature de sommet susceptible de modifier le fonctionnement mécanique du sommet du pneumatique.

Il est également avantageux que la distance axiale entre chaque extrémité axiale de la couche de déchapage et l'arête de la nervure circonférentielle la plus proche soit au moins égale à 3 mm. Cette caractéristique permet de protéger les extrémités axiales de la couche de déchapage de toute agression extérieure pendant la durée de vie de la nervure circonférentielle. Par ailleurs, elle permet de diminuer le risque d'avoir une extrémité axiale de la couche de déchapage débouchant dans un sillon circonférentiel, compte tenu des tolérances de fabrication. En effet, ceci serait susceptible de créer des amorces de fissure en pied de nervure circonférentielle et, par conséquent, de menacer l'intégrité de la nervure circonférentielle.

La couche de déchapage s'étend avantageusement circonférentiellement sur toute la circonférence du pneumatique, ce qui permet de toujours avoir la présence de la couche de déchapage à l'aplomb de toute fissure susceptible de se propager radialement vers l'intérieur. L'endommagement de la bande de roulement peut en effet survenir en n'importe quel point de la circonférence du pneumatique.

Un mode de réalisation préféré de l'invention est d'avoir la couche de déchapage constituée d'un matériau, comprenant des éléments de renforcement parallèles entre eux. C'est en effet la solution technique la plus simple dans le cas d'un pneumatique d'avion. En effet, il s'agit alors de positionner une couche d'éléments de renforcement radialement à l'extérieur de l'armature de sommet et localement sous chaque nervure circonférentielle. Le choix de la nature des éléments de renforcement est conditionné par les caractéristiques mécaniques visées.

Une première variante du mode de réalisation préféré se caractérise par le fait que l'angle formé par les éléments de renforcement de la couche de déchapage avec la direction circonférentielle du pneumatique est au moins égal à 30°. Cet intervalle d'inclinaison des éléments de renforcement mécanique a deux effets techniques. Tout d'abord, il limite la contribution de la couche de déchapage à la rigidité circonférentielle du sommet et évite un frettage important du sommet. Par ailleurs, les éléments de renforcement étant relativement inclinés par rapport à la direction circonférentielle, leurs longueurs sont relativement limitées. Les fissures se propageant préférentiellement le long des éléments de renforcement, la distance de fissuration est ainsi relativement limitée, ce qui limite la longueur circonférentielle des morceaux de bande de roulement.

Encore plus avantageusement, l'angle formé par les éléments de renforcement de la couche de déchapage avec la direction circonférentielle du pneumatique est au moins égal à 45°. Les effets techniques précédemment décrits sont encore plus marqués dans le cas présent.

Une autre variante du mode de réalisation préféré de l'invention est d'avoir les éléments de renforcement de la couche de déchapage constitués d'au moins un matériau textile. Les matériaux textiles présentent l'avantage d'avoir une force à rupture pas trop élevée, par rapport aux matériaux métalliques : ce qui est favorable à une rupture aisée desdits éléments de renforcement dans le processus de déchapage précédemment décrit. Leur module d'élasticité est également suffisamment faible pour minimiser la contribution mécanique de la couche de déchapage au fonctionnement mécanique du sommet.

Les éléments de renforcement de la couche de déchapage sont avantageusement constitués d'au moins un polyamide aliphatique, dont les caractéristiques mécaniques sont particulièrement adaptées aux effets recherchés : rupture aisée des éléments de renforcement et faible contribution à la rigidité du sommet.

Une variante particulièrement avantageuse est d'avoir les éléments de renforcement de la couche de déchapage constitués de nylon, matériau couramment utilisé dans les pneumatiques d'avion pour les éléments de renforcement des couches de carcasse ou de sommet.

Les caractéristiques et autres avantages de l'invention seront mieux compris à l'aide des figures 1 à 4 :
- figure 1 : coupe méridienne du sommet d'un pneumatique selon l'invention,
- figure 2 : coupe méridienne d'une portion de sommet de pneumatique, au niveau d'une nervure circonférentielle,
- figure 3 : vue de dessus d'une couche de déchapage, au niveau d'une nervure circonférentielle,
- figure 4 : graphique des masses des morceaux de bande de roulement en fonction du nombre de morceaux de bande de roulement

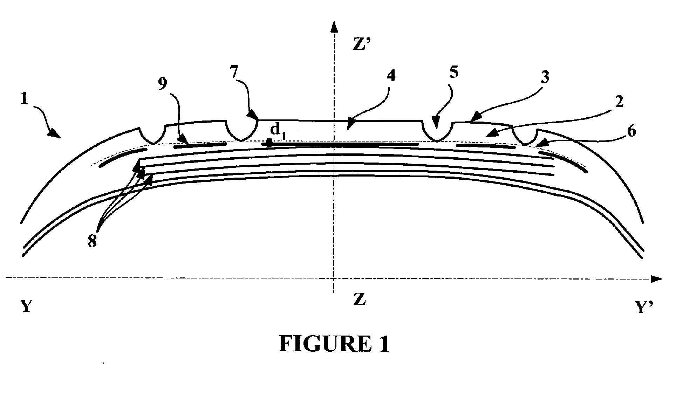

Les figures 1 à 3 ne sont pas représentées à l'échelle et sont représentées de façon simplifiée, afin de faciliter la compréhension de l'invention.

La figure 1 présente une coupe méridienne du sommet du pneumatique 1, c'est-à-dire une coupe dans un plan méridien (YY', ZZ'), où les directions YY' et ZZ' sont les directions respectivement axiale et radiale. La direction XX' (non représentée) est la direction circonférentielle. Le plan (XX', ZZ') est le plan équatorial.

La figure 1 présente un pneumatique 1 pour avion comprenant une bande de roulement 2 destinée à venir en contact avec un sol par l'intermédiaire d'une surface de roulement 3 et radialement comprise entre une surface de fond 6 et la surface de roulement 3. La bande de roulement 2 comprend au moins cinq nervures circonférentielles 4, dans le cas présent, adjacentes à au moins un sillon circonférentiel 5. Chaque nervure circonférentielle 4 s'étend radialement entre la surface de fond 6 et la surface de roulement 3 et axialement entre deux arêtes 7 dans la surface de roulement 3. Les nervures circonférentielles d'épaules les plus axialement extérieures sont limitées axialement à l'intérieur par une arête et axialement à l'extérieur par la limite axiale de la surface de contact avec le sol de la surface de roulement, définie par convention pour un pneumatique neuf soumis à une flèche radiale de 32%. Le pneumatique 1 comprend également une armature de sommet 8, constituées de couches de sommet, radialement intérieure à la surface de fond 6.

Une couche de déchapage 9, selon l'invention, est disposée radialement à l'intérieur de chaque nervure circonférentielle 4 entre la surface de fond 6 et l'armature de sommet 8, axialement entre les deux arêtes 7 de ladite nervure circonférentielle 4, dans la surface de roulement 3, et circonférentiellement sur toute la circonférence (non représentée) du pneumatique 1. La couche de déchapage 9 est radialement positionnée à la distance radiale d₁ de la surface de fond 6.

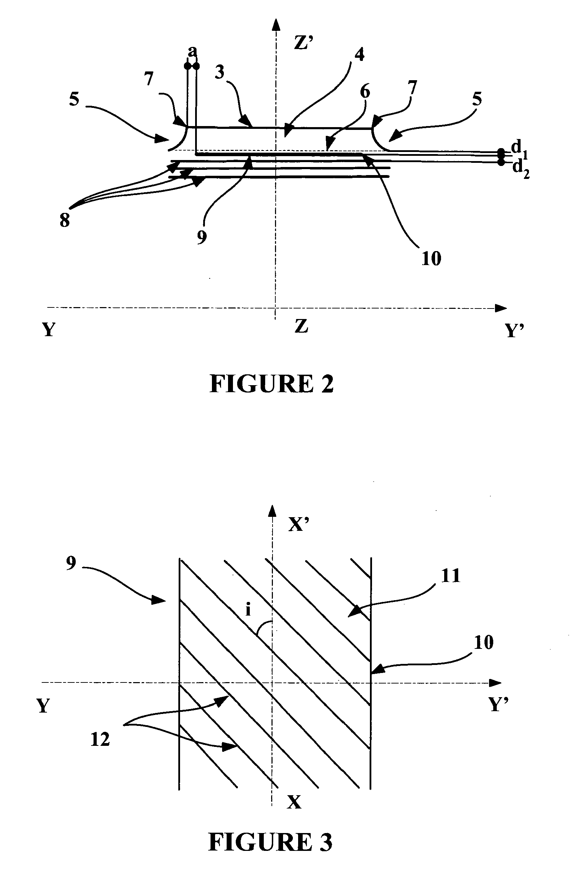

La figure 2 présente la coupe méridienne d'une nervure circonférentielle 4, s'étendant radialement entre la surface de fond 6 et la surface de roulement 3 et axialement entre deux arêtes 7 positionnées dans la surface de roulement 3. La nervure circonférentielle 4 est adjacente à deux sillons circonférentiels 5. Une couche de déchapage 9 est positionnée radialement à l'extérieur de la couche de sommet radialement extérieure de l'armature de sommet 8 et radialement à l'intérieur de la surface de fond 6. La couche de déchapage 9 est positionnée à la distance radiale d₁ de la surface de fond 6 et à la distance radiale d₂ de l'armature de sommet 8. Chaque extrémité axiale 10 de la couche de déchapage 9 est positionnée à la distance axiale a de l'arête 7 la plus proche de la nervure circonférentielle 4.

La figure 3 présente une vue de dessus d'une couche de déchapage 9 constitué d'un matériau 11, comprenant des éléments de renforcement 12 parallèles entre eux. Les éléments de renforcement 12 de la couche de déchapage 9 forment, avec la direction circonférentielle XX', un angle i.

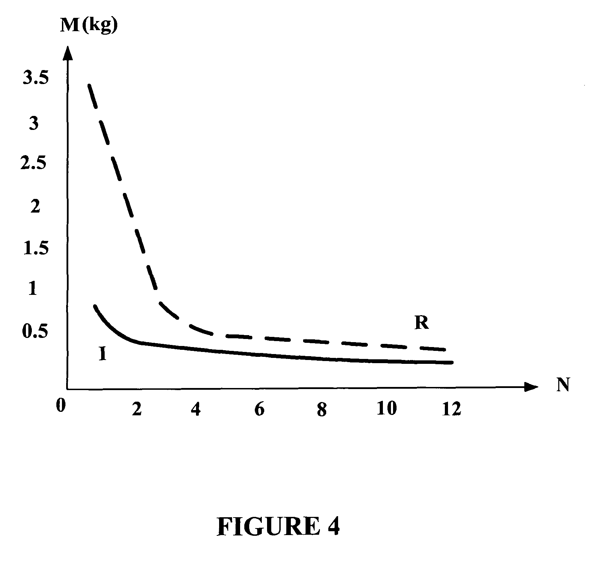

La graphique de la figure 4 présente la distribution des masses des morceaux de bande de roulement, obtenus après déchapage suite à un endommagement de la bande de roulement par un objet contondant, en fonction du nombre de morceaux. Sont représentées la distribution R de l'architecture de référence sans couche de déchapage et la distribution I d'une architecture selon l'invention avec couche de déchapage.

Les inventeurs ont réalisé l'invention selon le mode de réalisation préféré, avec une couche de déchapage radialement intérieure à chaque nervure circonférentielle et répartie sur toute la circonférence du pneumatique, pour un pneumatique d'avion de dimension 46x17R20, dont l'usage est caractérisé par une pression nominale égale à 15.9 bars, une charge statique nominale égale à 20473 daN et une vitesse de référence de 225 km/h.

Dans le pneumatique étudié, l'armature de sommet comprend 7 couches de travail, comprenant des éléments de renforcement en matériau hybride combinant un polyamide aliphatique, de type aramide, et un polyamide aromatique, de type nylon, lesdits éléments de renforcement formant un angle variable compris entre 0° et 12° avec la direction circonférentielle. L'armature de sommet comprend radialement, à l'extérieur des couches de travail, une couche de protection comprenant des éléments de renforcement métalliques sensiblement circonférentiels. Les couches de déchapage respectives des nervures circonférentielles d'épaules, intermédiaires et centrales ont des largeurs axiales respectives de 34 mm, 34 mm et 80 mm. Ces couches de déchapage sont radialement positionnées au niveau de la surface de fond et radialement extérieurement à 3 mm de la couche de sommet la plus radialement extérieure, qui, dans le cas présent, est une couche de protection. Chaque couche de déchapage comprend des éléments de renforcement en nylon, formant avec la direction circonférentielle, un angle de 45°. Le nylon utilisé a une force à rupture de 15 daN.

Dans le cas de l'architecture de référence, la masse des morceaux de bande de roulement est comprise entre 0.1 kg et 3.5 kg, alors que, dans l'architecture selon l'invention, la masse des morceaux de bande de roulement est comprise entre 0.1 kg et 0.8 kg.

L'invention peut être généralisée à divers types de couche de déchapage, tels que, de façon non exhaustive, une couche de déchapage de type tissu tramé ou de type feuille homogène, ou une superposition de couches de déchapage.

Pour encore mieux maîtriser la taille maximale des morceaux de bande de roulement, il peut être intéressant de créer des cavités au niveau des arêtes des nervures circonférentielles, sur une épaisseur radiale au plus égale à la hauteur radiale de la nervure circonférentielle, lesdites cavités étant réparties circonférentiellement selon un pas à optimiser en fonction de la longueur circonférentielle maximale des morceaux de bande de roulement visée. Ces cavités constituent des zones de découpe préférentielle de la bande de roulement, dans la mesure où elles permettent une diminution locale de l'épaisseur radiale de la bande de roulement favorisant à la fois un effet charnière lors du passage dans la surface de contact et l'émergence de fissures se propageant radialement vers l'extérieur à partir de la couche de déchapage.

## Revendications

1. Pneumatique (1) pour avion comprenant :
- une bande de roulement (2) destinée à venir en contact avec un sol par l'intermédiaire d'une surface de roulement (3) et radialement comprise entre une surface de fond (6) et la surface de roulement (3),
- la bande de roulement (2) comprenant au moins deux nervures circonférentielles (4) adjacentes à au moins un sillon circonférentiel (5),
- chaque nervure circonférentielle (4) s'étendant radialement entre la surface de fond (6) et la surface de roulement (3) et axialement entre deux arêtes (7) dans la surface de roulement (3),
- une armature de sommet (8) radialement intérieure à la surface de fond (6),
**caractérisé en ce qu'**une couche de déchapage (9) est disposée:
- radialement à l'intérieur d'au moins une nervure circonférentielle (4) entre la surface de fond (6) et l'armature de sommet (8),
- axialement entre les deux arêtes (7) de ladite nervure circonférentielle (4), dans la surface de roulement (3),
- et circonférentiellement sur au moins une partie de la circonférence du pneumatique (1),
et **en ce que** la distance radiale (d₁) entre la couche de déchapage (9) et la surface de fond (6) est au plus égale à 1 mm.

2. Pneumatique (1) pour avion selon la revendications 1, **caractérisé en ce que** la distance radiale (d₂) entre la couche de déchapage (9) et l'armature de sommet (8) est au moins égale à 2 mm.

3. Pneumatique (1) pour avion selon l'une des revendications 1 ou 2, **caractérisé en ce que** la distance axiale (a) entre chaque extrémité axiale (10) de la couche de déchapage (9) et l'arête (7) de la nervure circonférentielle (4) la plus proche est au moins égale à 3 mm.

4. Pneumatique (1) pour avion selon l'une quelconque des revendications 1 à 3, **caractérisé en ce que** la couche de déchapage (9) s'étend circonférentiellement sur toute la circonférence du pneumatique (1).

5. Pneumatique (1) pour avion selon l'une quelconque des revendications 1 à 4, **caractérisé en ce que** la couche de déchapage (9) est constituée d'un matériau (11), comprenant des éléments de renforcement (12) parallèles entre eux.

6. Pneumatique (1) pour avion selon la revendication 5, **caractérisé en ce que** l'angle (i) formé par les éléments de renforcement (12) de la couche de déchapage (11) avec la direction circonférentielle (XX') du pneumatique (1) est au moins égal à 30°.

7. Pneumatique (1) pour avion selon l'une des revendications 5 ou 6, **caractérisé en ce que** l'angle (i) formé par les éléments de renforcement (12) de la couche de déchapage (11) avec la direction circonférentielle (XX') du pneumatique (1) est au moins égal à 45°.

8. Pneumatique (1) pour avion selon l'une des quelconque des revendications 5 à 7, **caractérisé en ce que** les éléments de renforcement (12) de la couche de déchapage (11) sont constitués d'au moins un matériau textile.

9. Pneumatique (1) pour avion selon l'une quelconque des revendications 5 à 8, **caractérisé en ce que** les éléments de renforcement (12) de la couche de déchapage (11) sont constitués d'au moins un polyamide aliphatique.

10. Pneumatique (1) pour avion selon l'une quelconque des revendications 5 à 9, **caractérisé en ce que** les éléments de renforcement (12) de la couche de déchapage (11) sont constitués de nylon.

## Patentansprüche

1. Luftreifen (1) für Flugzeug, der Folgendes umfasst:
- einen Laufstreifen (2), der dazu bestimmt ist, mit einem Grund über eine Laufoberfläche (3) in Kontakt zu gelangen, und radial zwischen einer Bodenoberfläche (6) und der Laufoberfläche (3) enthalten ist,
- wobei die Lauffläche (2) wenigstens zwei Umfangsstege (4) aufweist, die zu wenigstens einer Umfangsrille (5) benachbart sind,
- wobei sich jeder Umfangssteg (4) radial zwischen der Bodenoberfläche (6) und der Laufoberfläche (3) und axial zwischen zwei Kanten (7) der Laufoberfläche (3) erstreckt,
- eine Scheitelbewehrung (8) radial innerhalb der Bodenoberfläche (6),
**dadurch gekennzeichnet, dass** eine Ablöseschicht (9) angeordnet ist:
- radial innerhalb wenigstens eines Umfangsstegs (4) zwischen der Bodenoberfläche (6) und der Scheitelbewehrung (8);
- axial zwischen den beiden Kanten (7) des Umfangsstegs (4) in der Laufoberfläche (3),
- und in Umfangsrichtung wenigstens auf einem Teil des Umfangs des Luftreifens (1),
und dass der radiale Abstand (d₁) zwischen der Ablöseschicht (9) und der Bodenoberfläche (6) höchstens gleich 1 mm ist.

2. Luftreifen (1) für Flugzeug nach Anspruch 1, **dadurch gekennzeichnet, dass** der radiale Abstand (d₂) zwischen der Ablöseschicht (9) und der Scheitelbewehrung (8) wenigstens zwei gleich 2 mm ist.

3. Luftreifen (1) für Flugzeug nach einem der Ansprüche 1 oder 2, **dadurch gekennzeichnet, dass** der axiale Abstand (a) zwischen jedem axialen Ende (10) der Ablöseschicht (9) und der nächsten Kante (7) des Umfangsstegs (4) wenigstens gleich 3 mm ist.

4. Luftreifen (1) für Flugzeug nach einem der Ansprüche 1 bis 3, **dadurch gekennzeichnet, dass** sich die Ablöseschicht (9) in Umfangsrichtung über den gesamten Umfang des Luftreifens (1) erstreckt.

5. Luftreifen (1) für Flugzeug nach einem der Ansprüche 1 bis 4, **dadurch gekennzeichnet, dass** die Ablöseschicht (9) aus einem Material (11) gebildet ist, das zueinander parallele Verstärkungselemente (12) enthält.

6. Luftreifen (1) für Flugzeug nach Anspruch 5, **dadurch gekennzeichnet, dass** der Winkel (i), der von den Verstärkungselementen (12) der Ablöseschicht (11) mit der Umfangsrichtung (XX') des Luftreifens (1) gebildet wird, wenigstens gleich 30° beträgt.

7. Luftreifen (1) für Flugzeug nach einem der Ansprüche 5 oder 6, **dadurch gekennzeichnet, dass** der Winkel (i), der von den Verstärkungselementen (12) der Ablöseschicht (11) mit der Umfangsrichtung (XX') des Luftreifens (1) gebildet wird, wenigstens gleich 45° beträgt.

8. Luftreifen (1) für Flugzeug nach einem der Ansprüche 5 bis 7, **dadurch gekennzeichnet, dass** die Verstärkungselemente (12) der Ablöseschicht (11) aus wenigstens einem Textilmaterial gebildet sind.

9. Luftreifen (1) für Flugzeug nach einem der Ansprüche 5 bis 8, **dadurch gekennzeichnet, dass** die Verstärkungselemente (12) der Ablöseschicht (11) aus wenigstens einem aliphatischen Polyamid gebildet sind.

10. Luftreifen (1) für Flugzeug nach einem der Ansprüche 5 bis 9, **dadurch gekennzeichnet, dass** die Verstärkungselemente (12) der Ablöseschicht (11) aus Nylon gebildet sind.

## Claims

1. Tyre (1) for an aeroplane, comprising:
- a tread (2) intended to come into contact with the ground via a tread surface (3) and comprised radially between a bottom surface (6) and the tread surface (3),
- the tread (2) comprising at least two circumferential ribs (4) adjacent to at least one circumferential groove (5),
- each circumferential rib (4) extending radially between the bottom surface (6) and the tread surface (3) and axially between two edge corners (7) in the tread surface (3),
- a crown reinforcement (8) radially on the inside of the bottom surface (6),
**characterized in that** a tread separation layer (9) is arranged:
- radially on the inside of at least one circumferential rib (4) between the bottom surface (6) and the crown reinforcement (8),
- axially between the two edge corners (7) of the said circumferential rib (4), in the tread surface (3),
- and circumferentially over at least part of the circumference of the tyre (1),
and **in that** the radial distance (d₁) between the tread separation layer (9) and the bottom surface (6) is at most equal to 1 mm.

2. Tyre (1) for an aeroplane according to Claim 1, **characterized in that** the radial distance (d₂) between the tread separation layer (9) and the crown reinforcement (8) is at least equal to 2 mm.

3. Tyre (1) for an aeroplane according to one of Claims 1 and 2, **characterized in that** the axial distance (a) between each axial end (10) of the tread separation layer (9) and the edge corner (7) of the circumferential rib (4) that is closest is at least equal to 3 mm.

4. Tyre (1) for an aeroplane according to any one of Claims 1 to 3, **characterized in that** the tread separation layer (9) extends circumferentially over the entire circumference of the tyre (1).

5. Tyre (1) for an aeroplane according to any one of Claims 1 to 4, **characterized in that** the tread separation layer (9) is made up of a material (11) comprising mutually parallel reinforcing elements (12).

6. Tyre (1) for an aeroplane according to Claim 5, **characterized in that** the angle (i) formed by the reinforcing elements (12) of the tread separation layer (11) with the circumferential direction (XX') of the tyre (1) is at least equal to 30°.

7. Tyre (1) for an aeroplane according to one of Claims 5 and 6, **characterized in that** the angle (i) formed by the reinforcing elements (12) of the tread separation layer (11) with the circumferential direction (XX') of the tyre (1) is at least equal to 45°.

8. Tyre (1) for an aeroplane according to any one of Claims 5 to 7, **characterized in that** the reinforcing elements (12) of the tread separation layer (11) are made up of at least one textile material.

9. Tyre (1) for an aeroplane according to any one of Claims 5 to 8, **characterized in that** the reinforcing elements (12) of the tread separation layer (11) are made up of at least one aliphatic polyamide.

10. Tyre (1) for an aeroplane according to any one of Claims 5 to 9, **characterized in that** the reinforcing elements (12) of the tread separation layer (11) are made up of nylon.
